# FASCICULE DE BREVET EUROPEEN

(11) **EP 3 209 845 B1**
(45) Date de publication et mention de la délivrance du brevet: **29.01.2020**
(21) Numéro de dépôt: 15786887.8
(22) Date de dépôt: 16.10.2015
(51) Int. Cl.: E06B 9/72, E06B 9/68, E06B 9/24

(54) **GAMME DE DISPOSITIFS D'ENTRAÎNEMENT MOTORISÉ POUR ÉCRANS D'OCCULTATION**
SPEKTRUM AN VORRICHTUNGEN MIT MOTORISIERTEM ANTRIEB FÜR JALOUSIEN
RANGE OF MOTORIZED-DRIVE DEVICES FOR SCREENING BLINDS

(30) Priorité: 20.10.2014 FR 1402357
(43) Date de publication de la demande: 30.08.2017
(73) Titulaire: SOMFY ACTIVITES SA, 74300 Cluses (FR)
(72) Inventeur: PERACHE, Jean-Michel, 74440 Taninges (FR); LAGARDE, Eric, 74700 Sallanches (FR)
(74) Mandataire: Bugnion Genève
(86) Numéro de dépôt international: PCT/EP2015/074015
(87) Numéro de publication internationale: WO 2016/062633

(56) Documents cités:
- FR-A1- 2 978 792

## Description

### DOMAINE TECHNIQUE DE L'INVENTION

La présente invention concerne une gamme de dispositifs d'entraînement motorisé pour écrans d'occultation.

### ETAT DE LA TECHNIQUE ANTERIEURE

On connaît par exemple de FR 2978792 A1 des dispositifs d'entraînement motorisé de différents types, dédiés au déploiement et à la rétractation d'écrans non enroulables (stores plissés, stores cellulaires, stores bateau ou stores vénitiens par exemple), d'autres dédiés uniquement à l'orientation de stores à lames orientables, et d'autres encore, dédiés à l'enroulement d'écrans enroulables. Ces dispositifs font généralement appel à des technologies voisines, mais distinctes, d'où un manque de rationalisation qui entraîne des coûts importants, notamment au niveau de la gestion des pièces constitutives de ces dispositifs d'entraînement. En particulier, la motorisation d'un dispositif d'entraînement dédié à une application donnée est considérée comme spécifique, pour répondre de manière ciblée aux exigences de vitesse, couple, niveau de bruit et aux contraintes de l'application. Des efforts ont été faits pour accroître la modularité des dispositifs d'entraînement, et notamment pour permettre la différenciation retardée entre plusieurs options disponibles pour l'entraînement d'un écran d'un type donné. Mais jusqu'ici, la multiplicité des types d'écrans reste un obstacle à une rationalisation poussée du nombre de dispositifs d'entraînement.

### EXPOSE DE L'INVENTION

L'invention vise à remédier aux inconvénients de l'état de la technique et à proposer des moyens simples pour rationaliser des dispositifs d'entraînement motorisé d'écran.

Pour ce faire est proposé, suivant un premier aspect de l'invention, une gamme de dispositifs d'entraînement motorisé pour écrans d'occultation, comportant:
- au moins un premier dispositif d'entraînement d'un premier écran d'occultation, comportant un premier support, un premier arbre tournant autour d'un premier axe de révolution par rapport au premier support, au moins un tambour d'enroulement d'un cordon d'entraînement du premier écran d'occultation, solidaire en rotation du premier arbre, un premier motoréducteur d'entraînement du premier arbre, et un premier module électronique de commande du premier motoréducteur,
- au moins un deuxième dispositif d'entraînement d'un deuxième écran d'occultation, comportant un deuxième support, un tube d'enroulement du deuxième écran d'occultation de manière à tourner autour d'un deuxième axe de révolution par rapport au deuxième support, un deuxième motoréducteur d'entraînement du tube d'enroulement, fixé au deuxième support et logé à l'intérieur du tube d'enroulement, et un deuxième module électronique de commande du deuxième motoréducteur,

Selon l'invention, le premier motoréducteur et le deuxième motoréducteur sont identiques et définissent un modèle de motoréducteur commun aux dispositifs d'entraînement motorisé de la gamme.

En choisissant un modèle de motoréducteur commun à deux applications distinctes, on permet la mise en commun d'une brique de motorisation spécifique à la gamme.

Suivant un mode de réalisation, le premier dispositif d'entraînement comporte un étage de réduction ou de surmultiplication de vitesse entre le premier motoréducteur et l'arbre d'entraînement. De préférence, l'étage de réduction ou de surmultiplication de vitesse du premier dispositif d'entraînement est un surmultiplicateur de vitesse, qui présente de préférence un rapport de vitesse dans une plage comprise entre 1,1 et 2. En prévoyant un surmultiplicateur de vitesse pour le premier dispositif d'entraînement, qui est a priori l'application requérant la vitesse de rotation de l'arbre la plus élevée, on peut dimensionner le réducteur de vitesse intégré au motoréducteur à une valeur intermédiaire entre les besoins du premier dispositif d'entraînement et du deuxième dispositif d'entraînement.

En particulier, on peut prévoir que le deuxième motoréducteur entraîne directement le tube d'enroulement du deuxième dispositif d'entraînement. Dans cette hypothèse, le rapport de vitesse du réducteur intégré au motoréducteur est adapté pour entraîner directement un écran enroulable.

Alternativement, le deuxième dispositif d'entraînement comporte un étage de surmultiplication ou de réduction de vitesse entre le deuxième motoréducteur et le tube d'enroulement. L'étage de surmultiplication ou de réduction de vitesse du deuxième dispositif d'entraînement permet de réaliser une gamme large à partir du même motoréducteur. De préférence, l'étage de surmultiplication ou de réduction de vitesse entre le deuxième motoréducteur et le tube d'enroulement est un réducteur de vitesse qui présente de préférence un rapport de vitesse dans une plage comprise entre 1/1,1 et 1/2. Dans cette hypothèse notamment, on peut prévoir que le premier motoréducteur entraîne directement le premier arbre, d'où une simplification supplémentaire.

De préférence, le modèle de motoréducteur commun de la gamme a un carter cylindrique. Le motoréducteur est ainsi totalement adapté à une utilisation pour l'entraînement d'un tambour d'enroulement d'un écran. Ce choix a pour conséquence que des pièces d'adaptation, par exemple des brides, seront de préférence utilisées pour fixer le carter cylindrique aux supports du premier dispositif d'entraînement et troisième dispositif d'entraînement.

Suivant un mode de réalisation, le premier dispositif d'entraînement comporte un ressort de compensation monté cinématiquement entre le premier arbre et le premier support. Le ressort de compensation permet de récupérer de l'énergie pendant la phase de déploiement de l'écran et de la restituer pendant la phase de rétractation. Ceci permet de limiter la puissance du motoréducteur. Pour les mêmes raisons, on peut prévoir que le deuxième dispositif d'entraînement comporte un ressort de compensation logé de préférence dans le tube d'enroulement et monté cinématiquement entre le tube d'enroulement et le deuxième support.

Préférentiellement, le modèle de motoréducteur commun de la gamme comporte un codeur tournant et un capteur de rotation lisant une information portée par le codeur.

La gamme de dispositifs d'entraînement définie précédemment est particulièrement adaptée à des installations dites autonomes ou sans fils, donc en particulier sans alimentation par le secteur. À cet effet, le premier motoréducteur est de préférence alimenté par une première source électrochimique logée dans le premier support, et le deuxième motoréducteur est alimenté par une deuxième source électrochimique logée dans le deuxième support. On peut le cas échéant également prévoir un rechargement des sources électrochimiques par un module de génération d'énergie, par exemple à base de cellules photovoltaïques.

Suivant un mode de réalisation particulièrement avantageux le premier module électronique de commande et le deuxième module électronique de commande sont matériellement identiques et définissent un modèle de module électronique de commande commun aux dispositifs d'entraînement de la gamme. On peut également prévoir de greffer à un module électronique de commande commun à l'ensemble de la gamme des modules additionnels correspondant à des fonctions spécifiques optionnelles.

Le module de commande peut éventuellement être intégré au motoréducteur. Toutefois, pour minimiser l'encombrement du motoréducteur, et permettre une plus grande flexibilité dans le positionnement des différents composants communs des dispositifs de la gamme, on peut avantageusement prévoir que:.
- le premier module électronique de commande du premier motoréducteur soit fixé au premier support à distance du premier motoréducteur et relié au premier motoréducteur par une première liaison électrique souple ;
- le deuxième module électronique de commande du deuxième motoréducteur soit fixé au deuxième support à distance du deuxième motoréducteur et relié au deuxième motoréducteur par une deuxième liaison électrique souple.

Suivant un mode de réalisation particulièrement avantageux, la gamme comporte en outre au moins un troisième dispositif d'entraînement d'un troisième écran d'occultation, comportant un troisième support, un troisième arbre tournant autour d'un troisième axe de révolution par rapport au troisième support, au moins un tambour d'enroulement d'un cordon d'orientation du troisième écran d'occultation, solidaire en rotation du troisième arbre, un troisième motoréducteur d'entraînement du troisième arbre, logé dans le troisième support et relié cinématiquement au troisième arbre par l'intermédiaire d'un réducteur de vitesse, et un troisième module électronique de commande du troisième motoréducteur, le troisième motoréducteur étant du modèle de motoréducteur commun de la gamme..

La rationalisation est alors plus poussée encore, puisque l'on couvre par exemple l'essentiel des besoins d'une gamme d'écrans d'intérieur.

Dans le cas où le troisième dispositif d'entraînement est également présent, on peut notamment prévoir que le surmultiplicateur de vitesse du premier dispositif d'entraînement présente un rapport de vitesses dans une plage comprise entre 1,1 et 2; et que le réducteur de vitesse du troisième dispositif d'entraînement présente un rapport de vitesses dans une plage comprise entre ½ et 1/4.

Le module de commande du troisième dispositif d'entraînement est de préférence du même modèle que celui des premier et deuxième dispositifs d'entraînement de la gamme. Le cas échéant, le troisième motoréducteur est alimenté par une troisième source électrochimique logée dans le troisième support.

Naturellement, il peut exister dans la gamme plusieurs dispositifs d'entraînement similaires au premier dispositif d'entraînement, plusieurs dispositifs d'entraînement similaires au deuxième dispositif d'entraînement, et le cas échéant plusieurs dispositifs d'entraînements similaires au troisième dispositif d'entraînement, et différant les uns des autres par leurs longueurs ou diamètres de tambours ou de tubes, la forme des supports, et le rapport de vitesse des surmultiplicateurs ou réducteurs de vitesse, voire l'absence ou la présence d'un étage de surmultiplication ou de réduction de vitesse pour ce qui est des dispositifs similaires au deuxième dispositif d'entraînement.

### BREVE DESCRIPTION DES FIGURES

D'autres caractéristiques et avantages de l'invention ressortiront à la lecture de la description qui suit, en référence aux figures annexées, qui illustrent :
- la figure 1 une vue schématique d'un premier dispositif d'entraînement d'un premier écran d'occultation appartenant à une gamme de dispositifs d'entraînement motorisé selon un mode de réalisation de l'invention,
- la figure 2 une vue schématique d'un deuxième dispositif d'entraînement d'un deuxième écran d'occultation, appartenant à la même gamme de dispositifs d'entraînement motorisé que le dispositif de la figure 1;
- la figure 3 une vue schématique d'un troisième dispositif d'entraînement d'un troisième écran d'occultation, appartenant à la même gamme de dispositifs d'entraînement motorisé que le dispositif de la figure 1;
- la figure 4 une vue schématique d'un motoréducteur et d'un module de commande communs aux premier, deuxième et troisième dispositifs d'entraînement motorisé des figures 1 à 3;
- la figure 5, une variante de réalisation du dispositif d'entraînement motorisé de la figure 2.

Pour plus de clarté, les éléments identiques seront repérés par des signes de référence identiques sur l'ensemble des figures.

### DESCRIPTION DÉTAILLÉE DE MODES DE REALISATION

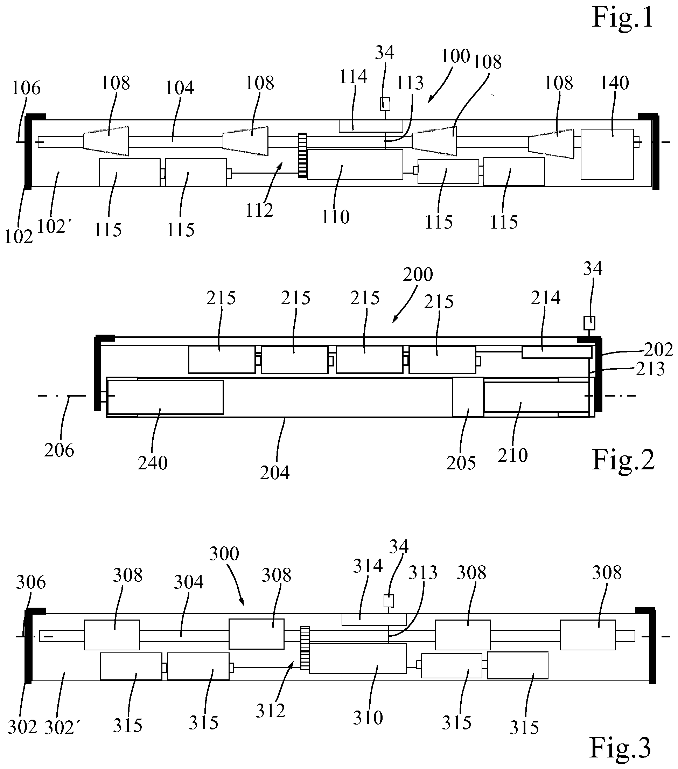

Les figures **1** à **3** illustrent trois dispositifs d'entraînement motorisé **100, 200, 300,** appartenant à une même gamme de dispositifs d'entraînement motorisé d'écrans d'occultation de différents types.

Sur la figure **1** est illustré un premier dispositif d'entraînement **100** de la gamme, destiné plus particulièrement à un premier écran d'occultation déployé et rétracté par l'intermédiaire d'un ou plusieurs cordons, par exemple un écran plissé, un store cellulaire, un store bateau ou un store vénitien. Le premier dispositif d'entraînement **100** comporte un premier support **102,** pouvant par exemple être constitué d'un rail **102'** solidarisant entre elles des pattes de fixation, et le cas échéant d'un boîtier de protection (non représenté), un premier arbre **104** tournant autour d'un premier axe de révolution **106** par rapport au premier support **102',** un ou plusieurs tambours **108** d'enroulement d'un ou plusieurs cordons d'entraînement du premier écran d'occultation, solidaires en rotation du premier arbre **104,** un premier motoréducteur **110** d'entraînement du premier arbre, logé dans le premier support **102** et dont un arbre de sortie est relié cinématiquement au premier arbre **104,** pour entraîner celui-ci en rotation et un premier module électronique de commande **114** fixé au support **102** à distance du premier motoréducteur **110.** Un étage de surmultiplication de vitesse **112** est également prévu entre l'arbre de sortie du motoréducteur et l'arbre d'entraînement **104.**

Sur la figure **2** est illustré un deuxième dispositif d'entraînement **200** destiné plus particulièrement à l'entraînement d'un deuxième écran d'occultation du type écran enroulable. Ce deuxième dispositif d'entraînement **200** comporte un support **202,** un tube **204** d'enroulement du deuxième écran d'occultation monté dans le support **202** de manière à tourner autour d'un deuxième axe de révolution **206** par rapport au deuxième support **202,** un deuxième motoréducteur **210** d'entraînement du tube d'enroulement **204,** logé à l'intérieur du tube d'enroulement **204,** fixé au deuxième support et dont un arbre de sortie est relié cinématiquement au tube d'enroulement **204** par une pièce de liaison **205,** et un deuxième module électronique de commande **214** fixé à distance du deuxième motoréducteur **210.**

Sur la figure **3** est illustré un troisième dispositif d'entraînement **300** de la gamme, destiné plus particulièrement à un premier écran orientable, notamment à un store à lames uniquement orientables. Le troisième dispositif d'entraînement **300** comporte un troisième support **302,** un rail (**302'**) fixé au troisième support **303,** un troisième arbre **304** tournant autour d'un troisième axe de révolution **306** par rapport au troisième support **302** et au rail **302',** au moins un tambour **308** d'enroulement d'un cordon d'orientation du troisième écran d'occultation, solidaire en rotation du troisième arbre **304,** un troisième motoréducteur **310** d'entraînement du troisième arbre **304,** logé dans le rail **302'** et dont un arbre de sortie est relié cinématiquement au troisième arbre **304** pour entraîner celui-ci en rotation par l'intermédiaire d'au moins un étage de réduction de vitesse **312,** et un troisième module électronique de commande **314** fixé au troisième support **302** à distance du troisième motoréducteur **310.**

Les dispositifs d'entraînement motorisé **100, 200, 300** présentent des caractéristiques communes, et notamment, un modèle de motoréducteur identique, alimenté en courant continu par des alimentations électrochimiques **115, 215, 315,** et commandé par un module de commande déporté **114, 214, 314.** Par modèle de motoréducteur identique, on entend ici que les motoréducteurs **110, 210, 310** sont identiques.

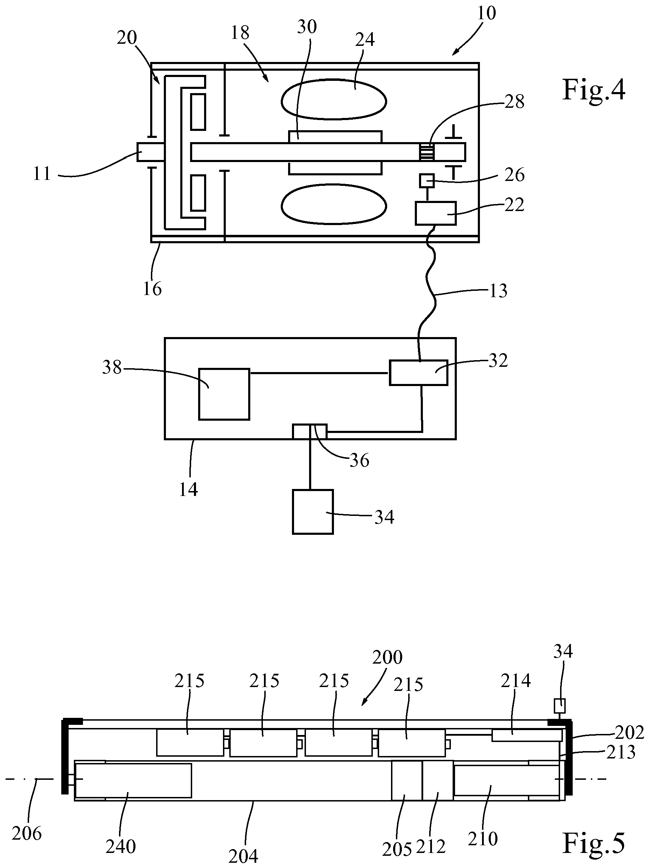

Plus spécifiquement, ce modèle de motoréducteur commun à toute la gamme, identifié par la référence **10** sur la figure **4****,** se caractérise par un carter cylindrique **16,** contenant un moteur **18** et un réducteur de vitesse **20** à un ou plusieurs étages. Ce carter cylindrique **16** permet une intégration directe du motoréducteur **10** à l'intérieur du tube **204** d'enroulement de l'écran du deuxième dispositif d'entraînement motorisé **200.** Le carter cylindrique **16** peut être fixé aux supports **102, 302** des premier et troisième dispositifs d'entraînement motorisé **100, 300** par l'intermédiaire de pièces d'adaptation, par exemple des brides. Alternativement, on peut fixer le carter cylindrique **16** du motoréducteur **10** à un carter de l'étage de surmultiplication de vitesse **112** du premier dispositif d'entraînement ou de l'étage de réduction de vitesse **312** du troisième dispositif d'entraînement.

Le moteur **18** est de préférence un moteur à courant continu à balais et collecteur. La commutation du courant dans les bobinages est réalisée mécaniquement par l'intermédiaire des lamelles du collecteur. Le moteur peut également être un moteur à courant continu sans balais à commutation électronique (ou encore appelé « BLDC », acronyme de l'expression anglo-saxonne BrushLess Direct Current). Un moteur de ce type comprend un rotor pourvu d'aimants permanents **30** et un stator pourvu de plusieurs enroulements **24.** Le moteur comprend, en outre, un circuit électronique de pilotage **22** agencé pour alimenter successivement les enroulements **24** en énergie électrique. Pour que le moteur fonctionne, le champ électromagnétique engendré par l'alimentation successive des enroulements **24** doit être synchronisé sur la position du rotor. Le circuit électronique de pilotage **22** peut être positionné, au moins en partie, dans le carter moteur **16.** Il comprend notamment au moins un capteur de rotation **26** optique ou magnétique, de préférence un capteur à effet hall, qui peut être soit associé à un codeur **28** monté sur l'arbre moteur, soit directement sensible au champ magnétique des pôles rotoriques **30.** La vitesse nominale du moteur peut être relativement élevée, de préférence supérieure à **25** tr/min, et de préférence supérieure à **30** tr/min, pour un couple assez faible, inférieur à **0,02** Nm. Le motoréducteur est de préférence conçu pour limiter la consommation électrique et pour émettre uniquement une faible émission sonore. Une partie au moins du circuit électronique **22** peut être comprise dans le module électronique de commande associée à chaque dispositif d'entraînement.

Le réducteur **20** associé au moteur **18** est positionné dans le carter commun cylindrique **16** du motoréducteur. Le réducteur **20** est de préférence un réducteur épicycloïdal à un ou plusieurs étages, présentant un arbre de sortie **11** constituant l'organe de sortie du motoréducteur **10.**

Selon un premier mode de réalisation représenté aux figures **1** à **3****,** le réducteur du motoréducteur **210** présente l'adaptation de couple nécessaire pour l'application sans autre étage de transmission à un écran enroulable. Dans ce mode de réalisation, le deuxième motoréducteur **210** entraîne directement le tube d'enroulement **204** du deuxième dispositif d'entraînement **200,** au travers de la pièce de liaison **205** entre l'arbre de sortie **11** du motoréducteur **210** et le tube d'enroulement **204.**

Dans la mesure où le couple et la vitesse en sortie du motoréducteur **10** sont optimisés pour l'actionnement de l'écran enroulable, une adaptation s'avère nécessaire pour les deux autres dispositifs **100, 300,** d'où la présence d'un étage de surmultiplication de vitesse **112** pour le premier dispositif **100** et d'un étage de réduction de vitesse **312** pour le troisième dispositif **300.** Le tableau suivant donne un exemple des rapports de vitesses de chaque étage:

| | | Dispositif n°1 | Dispositif n°2 | Dispositif n°3 |
|---|---|---|---|---|
| Motoréducteur | Couple nominal moteur (Nm) | 0.014 | 0.014 | 0.014 |
| | Vitesse nominale moteur (tr/min) | 1500 | 1500 | 1500 |
| | Rapport de vitesse du réducteur intégré | 1/43 | 1/43 | 1/43 |
| Étage additionnel | Rapport de vitesse | 1.6 | 1/1 | 1/2.3 |
| Arbre | Vitesse nominale | 55 | 35 | 15 |
| | Couple nominal | 0.4 | 0.6 | 1.4 |

Le circuit électronique de pilotage **22** du moteur **10** est relié par un câble de commande **13, 113, 213, 313** au circuit électronique de commande **114, 214, 314** déporté, qui transmet les commandes du circuit électronique de commande **114, 214, 314** au circuit électronique de pilotage **22,** et en retour fait remonter des données nécessaires à la commande, et notamment des données fournies par le capteur de rotation **26,** qui peuvent comporter une information de vitesse de rotation et/ou de position angulaire. Le circuit électronique de commande **114, 214, 314** peut être matériellement identique pour les trois dispositifs d'entraînement, constituant ainsi un module de commande universel **14,** illustré sur la figure **4****.** La programmation du module de commande peut être spécifique à chaque dispositif d'entraînement motorisé de la gamme. À cet effet, le circuit électronique de commande **14** présente de préférence une mémoire non volatile programmable **32,** par exemple de type EEPROM. Ceci permet notamment de prendre ou non en compte des besoins de gestion d'orientation, des ergonomies de commande particulières. Suivant les besoins de l'application, on peut également le cas échéant associer au module de commande un ou plusieurs capteurs **34** notamment pour détecter des paramètres ambiants (luminosité, vent, etc.) et prendre en compte ou non ces paramètres ambiants. Le module de commande **14** comporte de préférence à cet effet des bornes de connexion **36** pour de tels capteurs **34.** Le module de commande **14** comporte également une interface de réception **38** de signaux de commande transmis par câble ou sans fil, par exemple de type à infrarouge ou à radiofréquence.

Afin de pouvoir offrir des niveaux de fonctionnalités différents ou des protocoles de communication différents, on peut prévoir plusieurs modules de commande **14,** chaque module étant de préférence utilisable avec les trois types de dispositifs d'entraînement **100, 200, 300,** mais correspondant à un protocole de communication ou un niveau de fonctionnalité donnés, proposés pour l'ensemble de la gamme. On peut également prévoir un module de commande lui-même modulaire, avec une partie universelle commune à tous les dispositifs **100, 200, 300** de la gamme, et des modules optionnels, par exemple de télécommunication, de mesure ou de traitement de données ambiantes, qui viennent se brancher sur le module universel.

Le module de commande **14, 114, 214, 314** peut être positionné à tout endroit approprié du support. Il peut en particulier être positionné à proximité des générateurs électrochimiques **115, 215, 315.**

L'alimentation du circuit de commande **14, 114, 214, 314** et du circuit de pilotage **22** qui alimente le moteur **20** est réalisée en courant continu, de préférence à l'aide d'un ou plusieurs générateurs électrochimiques **115, 215, 315,** qui peuvent être des piles ou des accumulateurs rechargeables. De préférence, ce ou ces générateurs électrochimiques **115, 215, 315** sont fixés au support **102, 202, 302** du dispositif d'entraînement **100, 200, 300,** de préférence logés à l'intérieur du support. Le nombre et le positionnement du ou des générateurs électrochimiques **115, 215, 315** peuvent varier d'un dispositif d'entraînement de la gamme à l'autre. Pour une modularité maximale, on a intérêt à prévoir plusieurs modules de générateurs électrochimiques **115, 215, 315,** branchés en série ou en parallèle, ce qui permet notamment d'utiliser au mieux le volume disponible dans ou sur le support **102, 202, 302** dans chaque application. Alternativement, un dispositif d'entraînement motorisé peut être alimenté à partir du secteur, au travers d'un redresseur.

Le support **102, 202, 302** est spécifique à chaque dispositif d'entraînement de la gamme. Il peut s'agir d'un caisson ou d'un simple châssis.

Pour limiter la consommation d'énergie, on peut avantageusement prévoir pour le premier dispositif d'entraînement **100** et/ou le deuxième dispositif d'entraînement **200,** un ressort de compensation **140, 240.** Lorsque l'écran enroulable associé au deuxième dispositif d'entraînement **200,** ou l'écran plissé ou le store vénitien associé au premier dispositif d'entraînement **100** sont déployés sous l'effet de leur propre poids, ils contribuent à tendre le ressort d'entraînement associé **240, 140,** l'énergie étant emmagasinée sous forme d'énergie potentielle élastique et restituée lors de la remontée de l'écran.

Suivant un deuxième mode de réalisation représenté à la figure **5****,** le réducteur **20** associé au moteur **18** est positionné dans le carter commun cylindrique **16** du motoréducteur et présente l'adaptation de couple nécessaire pour l'application sans autre étage de transmission à un écran non enroulable. Suivant ce mode de réalisation, le surmultiplicateur **112** du premier dispositif d'entraînement **100** peut être omis. Il convient par contre de prévoir, comme illustré sur la figure **5****,** un étage de réduction de vitesse **212** entre le motoréducteur **210** et le tube **204** d'enroulement de l'écran du deuxième dispositif d'entraînement **200.** Cet étage de réduction de vitesse **212,** qui doit impérativement s'inscrire dans l'enveloppe cylindrique du motoréducteur **210,** dans le prolongement direct de celui-ci.

Le tableau suivant donne une illustration de plages de choix possibles pour le dimensionnement des différents composants des dispositifs d'entraînement **100, 200, 300:**

| | | Dispositif n°1 | Dispositif n°2 | Dispositif n°3 |
|---|---|---|---|---|
| Motoréducteur | Couple nominal moteur (Nm) | 0.014 | 0.014 | 0.014 |
| | Vitesse nominale moteur (tr/min) | 1500 | 1500 | 1500 |
| | Rapport de vitesse du réducteur intégré | 1/27.2 | 1/27.2 | 1/27.2 |
| Étage additionnel | Rapport de vitesse | 1/1 | 1/1.6 | 1/3.6 |
| Arbre | Vitesse nominale | 55 | 35 | 15 |
| | Couple nominal | 0.4 | 0.6 | 1.4 |

Suivant une autre variante de réalisation, le réducteur **20** associé au moteur **18** et positionné dans le carter commun cylindrique **16** du motoréducteur présente une adaptation de couple intermédiaire entre les besoins des dispositifs d'entraînement motorisés d'un écran non enroulable et d'un écran enroulable. Ainsi, le dispositif d'entraînement **200** de la figure **5** dédié à l'enroulement d'un écran prévoit, entre le motoréducteur **210** et le tube **204** d'enroulement de l'écran du deuxième dispositif d'entraînement **200,** un étage de surmultiplication de vitesse **212,** qui doit impérativement s'inscrire dans l'enveloppe cylindrique du motoréducteur **210,** dans le prolongement direct de celui-ci. Le premier dispositif d'entraînement motorisé comprend lui un étage de surmultiplication de vitesse **112** entre l'arbre de sortie **11** du motoréducteur et l'arbre d'entraînement **104.**

On se donne ainsi davantage de liberté dans le choix du modèle de moteur **18** ou de motoréducteur **10** adapté aux contraintes de fonctionnement ou de dimensionnement de l'ensemble de la gamme. Naturellement, les dimensionnements ci-dessus ne sont donnés qu'à titre illustratif et non limitatif. Ils correspondent à une gamme de dispositifs d'entraînement motorisé alimentés par des alimentations électrochimiques autonomes embarquées, avec une faible puissance disponible. Pour une gamme de dispositifs d'entraînement alimentés par le secteur, la puissance disponible est beaucoup plus importante et conduit à un dimensionnement différent. Toutefois, les rapports de vitesse des étages additionnels restent relativement proches des plages décrites précédemment, car le dimensionnement du rapport de vitesses de l'étage additionnel est fonction de type d'écran entraîné plus que de la puissance disponible.

Par ailleurs, il est possible d'intégrer le circuit électronique de pilotage au module électronique de commande déporté.

## Revendications

1. Gamme de dispositifs d'entraînement motorisé (100, 200, 300) pour écrans d'occultation, comportant:
- au moins un premier dispositif d'entraînement (100) d'un premier écran d'occultation, comportant un premier support (102), un premier arbre (104) tournant autour d'un premier axe de révolution (106) par rapport au premier support (102), au moins un tambour (108) d'enroulement d'un cordon d'entraînement du premier écran d'occultation, solidaire en rotation du premier arbre (104), un premier motoréducteur (110) d'entraînement du premier arbre (104), et un premier module électronique de commande (114) du premier motoréducteur (110),
- au moins un deuxième dispositif d'entraînement (200) d'un deuxième écran d'occultation, comportant un deuxième support (202), un tube (204) d'enroulement du deuxième écran d'occultation de manière à tourner autour d'un deuxième axe de révolution (206) par rapport au deuxième support (202), un deuxième motoréducteur (210) d'entraînement du tube d'enroulement (204), fixé au deuxième support et logé à l'intérieur du tube d'enroulement (204), et un deuxième module électronique de commande (214) du deuxième motoréducteur (210),
**caractérisée en ce que** le premier motoréducteur (110) et le deuxième motoréducteur (210) sont identiques et définissent un modèle de motoréducteur (10) commun aux dispositifs d'entraînement motorisé (110, 210) de la gamme.

2. Gamme de dispositifs d'entraînement motorisé selon la revendication 1, **caractérisée en ce que** le premier dispositif d'entraînement (100) comporte un étage de réduction ou de surmultiplication de vitesse (112) entre le premier motoréducteur et l'arbre d'entraînement (104).

3. Gamme de dispositifs d'entraînement motorisé selon la revendication 2, **caractérisée en ce que** l'étage de réduction ou de surmultiplication de vitesse du premier dispositif d'entraînement (100) est un surmultiplicateur de vitesse (112), qui présente de préférence un rapport de vitesse dans une plage comprise entre 1,1 et 2.

4. Gamme de dispositifs d'entraînement motorisé selon l'une quelconque des revendications 2 ou 3, **caractérisée en ce que** le deuxième motoréducteur (210) entraîne directement le tube d'enroulement (204) du deuxième dispositif d'entraînement (200).

5. Gamme de dispositifs d'entraînement motorisé selon l'une quelconque des revendications 1 à 3, **caractérisée en ce que** le deuxième dispositif d'entraînement (200) comporte un étage de surmultiplication ou de réduction de vitesse (212) entre le deuxième motoréducteur et le tube d'enroulement (204).

6. Gamme de dispositifs d'entraînement motorisé selon la revendication 5, **caractérisée en ce que** l'étage de surmultiplication ou de réduction de vitesse (212) entre le deuxième motoréducteur et le tube d'enroulement (204) est un réducteur de vitesse (212) qui présente de préférence un rapport de vitesse dans une plage comprise entre 1/1,1 et 1/2.

7. Gamme de dispositifs d'entraînement motorisé selon l'une quelconque des revendications 5 ou 6, **caractérisée en ce que** le premier motoréducteur (110) entraîne directement le premier arbre (104).

8. Gamme de dispositifs d'entraînement motorisé selon l'une quelconque des revendications précédentes, **caractérisée en ce que** le modèle de motoréducteur (10) commun de la gamme a un carter cylindrique (16).

9. Gamme de dispositifs d'entraînement motorisé selon l'une quelconque des revendications précédentes, **caractérisée en ce que** le premier dispositif d'entraînement (100) comporte un ressort de compensation (140) monté cinématiquement entre le premier arbre (104) et le premier support (102).

10. Gamme de dispositifs d'entraînement motorisé selon l'une quelconque des revendications précédentes, **caractérisée en ce que** le deuxième dispositif d'entraînement (200) comporte un ressort de compensation (240) logé de préférence dans le tube d'enroulement (204) et monté cinématiquement entre le tube d'enroulement (204) et le deuxième support (202).

11. Gamme de dispositifs d'entraînement motorisé selon l'une quelconque des revendications précédentes, **caractérisée en ce que** le modèle de motoréducteur (10) commun de la gamme comporte un codeur tournant (28) et un capteur de rotation (26) lisant une information portée par le codeur.

12. Gamme de dispositifs d'entraînement motorisé selon l'une quelconque des revendications précédentes, **caractérisée en ce que** le premier motoréducteur (110) est alimenté par une première source électrochimique (115) logée dans le premier support (102), et le deuxième motoréducteur (200) est alimenté par une deuxième source électrochimique (215) logée dans le deuxième support (202).

13. Gamme de dispositifs d'entraînement motorisé selon l'une quelconque des revendications précédentes, **caractérisée en ce que** le premier module électronique de commande (114) et le deuxième module électronique de commande (214) sont matériellement identiques et définissent un modèle de module électronique de commande (14) commun aux dispositifs d'entraînement de la gamme.

14. Gamme de dispositifs d'entraînement motorisé selon l'une quelconque des revendications précédentes, **caractérisée en ce que**:
- le premier module électronique de commande (114) du premier motoréducteur (110) est fixé au premier support (102) à distance du premier motoréducteur (110) et relié au premier motoréducteur (110) par une première liaison électrique souple (113);
- le deuxième module électronique de commande (214) du deuxième motoréducteur (210) est fixé au deuxième support (202) à distance du deuxième motoréducteur (210) et relié au deuxième motoréducteur (210) par une deuxième liaison électrique souple (213).

15. Gamme de dispositifs d'entraînement motorisé selon l'une quelconque des revendications précédentes, **caractérisée en ce qu'**elle comporte en outre:
- au moins un troisième dispositif d'entraînement (300) d'un troisième écran d'occultation, comportant un troisième support (302), un troisième arbre (304) tournant autour d'un troisième axe de révolution (306) par rapport au troisième support (302), au moins un tambour (308) d'enroulement d'un cordon d'orientation du troisième écran d'occultation, solidaire en rotation du troisième arbre (304), un troisième motoréducteur (310) d'entraînement du troisième arbre (304), logé dans le troisième support et relié cinématiquement au troisième arbre (304) par l'intermédiaire d'un réducteur de vitesse (312), et un troisième module électronique de commande (314) du troisième motoréducteur (310), le troisième motoréducteur (310) étant du modèle de motoréducteur (10) commun de la gamme.

16. Gamme de dispositifs d'entraînement motorisé selon la revendication 15 et la revendication 3, **caractérisée en ce que**:
- le surmultiplicateur de vitesse (112) du premier dispositif d'entraînement présente un rapport de vitesses dans une plage comprise entre 1,1 et 2;
le réducteur de vitesse (312) du troisième dispositif d'entraînement présente un rapport de vitesses dans une plage comprise entre ½ et 1/4.

## Patentansprüche

1. Spektrum an Vorrichtungen mit motorisiertem Antrieb (100, 200, 300) für Jalousien, umfassend:
- mindestens eine erste Vorrichtung mit Antrieb (100) einer ersten Jalousie, umfassend einen ersten Träger (102), eine erste Welle (104), die sich um eine erste Drehachse (106) mit Bezug auf den ersten Träger (102) dreht, mindestens eine Trommel (108) zum Aufwickeln eines Bands zum Antrieb der ersten Jalousie, das drehfest mit der ersten Welle (104) verbunden ist, einen ersten Getriebemotor (110) zum Antrieb der ersten Welle (104) und ein erstes elektronisches Modul zur Steuerung (114) des ersten Getriebemotors (110),
- mindestens eine zweite Vorrichtung mit Antrieb (200) einer zweiten Jalousie, umfassend einen zweiten Träger (202), ein Rohr (204) zum Aufrollen der zweiten Jalousie derart, dass sie sich um eine zweite Drehachse (206) mit Bezug auf den zweiten Träger (202) dreht, einen zweiten Getriebemotor (210) zum Antrieb des Rohrs zum Aufwickeln (204), der am zweiten Träger fixiert ist und im Inneren des Rohrs zum Aufwickeln (204) aufgenommen ist, und ein zweites elektronisches Modul zu Steuerung (214) des zweiten Getriebemotors (210),
**dadurch gekennzeichnet, dass** der erste Getriebemotor (110) und der zweite Getriebemotor (210) identisch sind und ein Getriebemotormodell (10) definieren, das den Vorrichtungen mit motorisiertem Antrieb (110, 210) des Spektrums gemeinsam ist.

2. Spektrum an Vorrichtungen mit motorisiertem Antrieb nach Anspruch 1, **dadurch gekennzeichnet, dass** die erste Vorrichtung mit Antrieb (100) eine Untersetzungs- oder Overdrive-Stufe (112) zwischen dem ersten Getriebemotor und der Antriebswelle (104) umfasst.

3. Spektrum an Vorrichtungen mit motorisiertem Antrieb nach Anspruch 2, **dadurch gekennzeichnet, dass** die Untersetzungs- oder Overdrive-Stufe der ersten Vorrichtung mit Antrieb (100) ein Overdrive (112) ist, der vorzugsweise ein Geschwindigkeitsverhältnis in einem Bereich zwischen 1,1 und 2 aufweist.

4. Spektrum an Vorrichtungen mit motorisiertem Antrieb nach einem der Ansprüche 2 oder 3, **dadurch gekennzeichnet, dass** der zweite Getriebemotor (210) direkt das Rohr zum Aufwickeln (204) der zweiten Vorrichtung mit Antrieb (200) antreibt.

5. Spektrum an Vorrichtungen mit motorisiertem Antrieb nach einem der Ansprüche 1 bis 3, **dadurch gekennzeichnet, dass** die zweite Vorrichtung mit Antrieb (200) eine Untersetzungs- oder Overdrive-Stufe (212) zwischen dem zweiten Getriebemotor und dem Rohr zum Aufwickeln (204) umfasst.

6. Spektrum an Vorrichtungen mit motorisiertem Antrieb nach Anspruch 5, **dadurch gekennzeichnet, dass** die Untersetzungs- oder Overdrive-Stufe (212) zwischen dem zweiten Getriebemotor und dem Rohr zum Aufwickeln (204) ein Untersetzungsgetriebe (212) ist, das vorzugsweise ein Geschwindigkeitsverhältnis in einem Bereich zwischen 1/1,1 und 1/2 aufweist.

7. Spektrum an Vorrichtungen mit motorisiertem Antrieb nach einem der Ansprüche 5 oder 6, **dadurch gekennzeichnet, dass** der erste Getriebemotor (110) direkt die erste Welle (104) antreibt.

8. Spektrum an Vorrichtungen mit motorisiertem Antrieb nach einem der vorhergehenden Ansprüche, **dadurch gekennzeichnet, dass** das Getriebemotormodell (10), das dem Spektrum gemeinsam ist, ein zylindrisches Gehäuse (16) aufweist.

9. Spektrum an Vorrichtungen mit motorisiertem Antrieb nach einem der vorhergehenden Ansprüche, **dadurch gekennzeichnet, dass** die erste Vorrichtung zum Antrieb (100) eine Kompensationsfeder (140) umfasst, die kinematisch zwischen der ersten Welle (104) und dem ersten Träger (102) montiert ist.

10. Spektrum an Vorrichtungen mit motorisiertem Antrieb nach einem der vorhergehenden Ansprüche, **dadurch gekennzeichnet, dass** die zweite Vorrichtung zum Antrieb (200) eine Kompensationsfeder (240) umfasst, die vorzugsweise in dem Rohr zum Aufwickeln (204) untergebracht und kinematisch zwischen dem Rohr zum Aufwickeln (204) und dem zweiten Träger (202) montiert ist.

11. Spektrum an Vorrichtungen mit motorisiertem Antrieb nach einem der vorhergehenden Ansprüche, **dadurch gekennzeichnet, dass** das Getriebemotormodell (10), das dem Spektrum gemeinsam ist, einen drehenden Codierer (28) und einen Drehungssensor (26) umfasst, der eine Information, getragen vom Codierer, liest.

12. Spektrum an Vorrichtungen mit motorisiertem Antrieb nach einem der vorhergehenden Ansprüche, **dadurch gekennzeichnet, dass** das erste Motorgetriebe (110 von einer ersten elektrochemischen Quelle (115) versorgt wird, die im ersten Träger (102) untergebracht ist, und das zweite Motorgetriebe (200) von einer zweiten elektrochemischen Quelle (215) versorgt wird, die im zweiten Träger (202) untergebracht ist.

13. Spektrum an Vorrichtungen mit motorisiertem Antrieb nach einem der vorhergehenden Ansprüche, **dadurch gekennzeichnet, dass** das erste elektronische Steuermodul (114) und das zweite elektronische Steuermodul (214) materiell identisch sind und ein Modell eines elektronischen Steuermoduls (14) definieren, das den Vorrichtungen mit Antrieb des Spektrums gemeinsam ist.

14. Spektrum an Vorrichtungen mit motorisiertem Antrieb nach einem der vorhergehenden Ansprüche, **dadurch gekennzeichnet, dass**
- das erste elektronische Steuermodul (114) des ersten Motorgetriebes (110) an dem ersten Träger (102) in einem Abstand vom ersten Motorgetriebe (110) fixiert ist und mit dem ersten Motorgetriebe (110) durch eine erste flexible elektrische Verbindung (113) verbunden ist;
- das zweite elektronische Steuermodul (214) des zweiten Motorgetriebes (210) an den zweiten Träger (202) in einem Abstand vom zweiten Motorgetriebe (210) fixiert und mit dem zweiten Motorgetriebe (210) durch eine zweite flexible elektrische Verbindung (213) verbunden ist.

15. Spektrum an Vorrichtungen mit motorisiertem Antrieb nach einem der vorhergehenden Ansprüche, **dadurch gekennzeichnet, dass** es außerdem Folgendes umfasst:
- mindestens eine dritte Vorrichtung mit Antrieb (300) einer dritten Jalousie, umfassend einen dritten Träger (302), eine dritte Welle (304), die sich um eine dritte Drehachse (306) mit Bezug auf den dritten Träger (302) dreht, mindestens eine Trommel (308) zum Aufrollen eines Bands zur Ausrichtung der dritten Jalousie, die drehfest mit der dritten Welle (304) verbunden ist, ein drittes Motorgetriebe (310) zum Antrieb der dritten Welle (304), das in dem dritten Träger aufgenommen ist und kinematisch mit der dritten Welle (304) mit Hilfe eines Untersetzungsgetriebes (312) verbunden ist, und ein drittes elektronisches Steuermodul (314) des dritten Motorgetriebes (310), wobei das dritte Motorgetriebe (310) vom Motorgetriebemodell (10) ist, das dem Spektrum gemeinsam ist.

16. Spektrum an Vorrichtungen mit motorisiertem Antrieb nach Anspruch 15 und Anspruch 3, **dadurch gekennzeichnet, dass**:
- der Overdrive (112) der ersten Vorrichtung mit Antrieb ein Geschwindigkeitsverhältnis in einem Bereich zwischen 1,1 und 2 aufweist;
das Untersetzungsgetriebe (312) der dritten Vorrichtung mit Antrieb ein Geschwindigkeitsverhältnis in einem Bereich zwischen 1/2 und 1/4 aufweist.

## Claims

1. A range of motorized-drive devices (100, 200, 300) for screening blinds, comprising:
- at least one first drive device (100) for driving a first screening blind, comprising a first support (102), a first shaft (104) rotating around a first axis of revolution (106) with respect to the first support (102), at least a winding drum (108) for winding a drive cord of the first screening blind, secured in rotation with the first shaft (104), a first geared motor unit (110) for driving the first shaft (104), and a first electronic control module (114) of the first geared motor unit (110),
- at least one second drive device (200) for driving a second screening blind, comprising a second support (202), a winding tube (204) for the second screening blind so as to rotate around a second axis of revolution (206) with respect to the second support (202), a second geared motor unit (210) for driving the winding tube (204), fixed to the second support and housed inside the winding tube (204), and a second electronic control module (214) of the second geared motor (210),
**characterized in that** the first geared motor unit (110) and the second geared motor unit (210) are identical and define a geared motor unit model (10) shared by the motorized-drive devices (110, 210) of the range.

2. The range of motorized-drive devices according to claim 1, **characterized in that** the first motorized drive device (100) comprises a speed reduction or overdrive stage (112) between the first geared motor unit and the driveshaft (104).

3. The range of motorized-drive devices according to claim 2, **characterized in that** the speed reduction or overdrive stage of the first drive device (100) is an overdrive (112), which preferably has a speed ratio in a range comprised between 1.1 and 2.

4. The range of motorized-drive devices according to any one of claims 2 or 3, **characterized in that** the second geared motor unit (210) directly drives the winding tube (204) of the second drive device (200).

5. The range of motorized-drive devices according to any one of claims 1 to 3, **characterized in that** the second drive device (200) includes a speed overdrive or reduction stage (212) between the second geared motor and the winding tube (204).

6. The range of motorized-drive devices according to claim 5, **characterized in that** the speed overdrive or reduction stage (212) between the second geared motor unit and the winding tube (204) is a speed reducer (212) that preferably has a speed ratio in a range comprised between 1/1.1 and 1/2.

7. The range of motorized-drive devices according to any one of claims 5 or 6, **characterized in that** the first geared motor unit (110) directly drives the first shaft (104).

8. The range of motorized-drive devices according to any one of the preceding claims, **characterized in that** the first geared motor unit (10) shared by the range has a cylindrical casing (16).

9. The range of motorized-drive devices according to any one of the preceding claims, **characterized in that** the first drive device (100) includes a compensating spring (140) mounted kinematically between the first shaft (104) and the first support (102).

10. The range of motorized-drive devices according to any one of the preceding claims, **characterized in that** the second drive device (200) includes a compensating spring (240) preferably housed in the winding tube (204) and mounted kinematically between the winding tube (204) and the second support (202).

11. The range of motorized-drive devices according to any one of the preceding claims, **characterized in that** the shared geared motor unit model (10) of the range comprises a rotary encoder (28) and a rotation sensor (26) reading information borne by the encoder.

12. The range of motorized-drive devices according to any one of the preceding claims, **characterized in that** the first geared motor unit (110) is preferably powered by a first electrochemical source (115) housed in the first support (102), and the second geared motor unit (200) is powered by a second electrochemical source (215) housed in the second support (202).

13. The range of motorized-drive devices according to any one of the preceding claims, **characterized in that** the first electronic control module (114) and the second electronic control module (214) are physically identical and define an electronic control module (14) shared by the drive devices in the range.

14. The range of motorized-drive devices according to any one of the preceding claims, **characterized in that**:
- the first electronic control module (114) of the first geared motor unit (110) is fastened to the first support (102) remote from the first geared motor unit (110) and connected to the first geared motor unit (110) by a first flexible electrical connection (113);
- the second electronic control module (214) of the second geared motor unit (210) is fastened to the second support (202) remote from the second geared motor unit (210) and connected to the second geared motor (210) unit by a second flexible electrical connection (213).

15. The range of motorized-drive devices according to any one of the preceding claims, **characterized in that** it further comprises:
- at least one third device (300) for driving a third screening blind, including a third support (302), a third shaft (304) rotating around a third axis of revolution (306) with respect to the third support (302), at least a winding drum (308) for winding a drive cord of the third screening blind, secured in rotation with the third shaft (304), a third geared motor unit (310) for driving the third shaft (304), housed in the third support and kinematically connected to the third shaft (304) by a speed reducer (312), and a third electronic control module (314) of the third geared motor unit (310), the third geared motor unit (310) being of the shared geared motor unit model (10) of the range.

16. The range of motorized-drive devices according to claim 15 and claim 3, **characterized in that**:
- the overdrive (112) of the first driving device has a speed ratio in a range comprised between 1.1 and 2;
the speed reducer (312) of the first driving device has a speed ratio in a range comprised between 1/2 and 1/4.
